# EUROPEAN PATENT APPLICATION

(11) **EP 4 661 166 A1**
(43) Date of publication of application: **10.12.2025**
(21) Application number: 25152602.6
(22) Date of filing: 17.01.2025
(51) Int. Cl.: H01M 50/107

(54) **SAFE CYLINDRICAL BATTERY**

(30) Priority: 07.06.2024 CN 202421291959 U
(71) Applicant: Shenzhen Bak Power Battery Co., Ltd., Shenzhen, Guangdong 518000 (CN)
(72) Inventor: SUN, Yunlong, Shenzhen, GUANGDONG, 518000 (CN); QIU, Mo, Shenzhen, GUANGDONG, 518000 (CN); GUO, Xinlu, Shenzhen, GUANGDONG, 518000 (CN); HUANG, Ling, Shenzhen, GUANGDONG, 518000 (CN); TANG, Yunqi, Shenzhen, GUANGDONG, 518000 (CN); AI, Xianfeng, Shenzhen, GUANGDONG, 518000 (CN); AN, Weifeng, Shenzhen, GUANGDONG, 518000 (CN); LI, Fengmei, Shenzhen, GUANGDONG, 518000 (CN)
(74) Representative: Gamba, Alessandro

(57) **Abstract**

The present disclosure discloses a safe cylindrical battery, including a battery housing, wherein a core assembly is arranged in the battery housing, and the core assembly includes an electrode sheet (20), a compact full electrode lug (21), and a channel full electrode lug (22); the compact full electrode lug (21) is vertically arranged on one end of the electrode sheet (20); the channel full electrode lug (22) is parallelly arranged on the other end of the electrode sheet (20); the electrode sheet (20), the compact full electrode lug (21), and the channel full electrode lug (22) are of an integral structure; the electrode sheet (20), the compact full electrode lug (21), and channel full electrode lug (22) are wound to form a helical structure; and an explosion-proof line (30) is engraved on one end of the battery housing corresponding to the channel full electrode lug (22). The present disclosure provides a safe cylindrical battery, which can timely and directionally discharge gases in the battery through the channel electrode lug (22) during thermal runaway, so as to improve the safety performance.

## Description

### TECHNICAL FIELD

The present disclosure relates to the technical field of cylindrical batteries, and especially relates to a safe cylindrical battery.

### BACKGROUND ART

With the rapid development of the new energy industry, a new type of rechargeable battery including the lithium-ion battery and sodium-ion battery emerges. They are widely used in the fields of digital product, power battery system, and energy storage due to their high energy density, small volume structure, fast discharge speed, low self-discharge rate, long cycle, and other features.

During practical applications, the lithium-ion battery and sodium-ion battery need to pass the battery safety test, such as hot box and thermal runaway tests, so as to provide a safe environment for the use of automotive electric products. However, the current high energy density battery in the large cylindrical batteries is difficult to pass the safety test.

### SUMMARY

The object of the present disclosure is to provide a safe cylindrical battery, which can timely and directionally discharge gases in the battery through the channel electrode lug during thermal runaway, so as to improve the safety performance.

The technical solutions adopted for the safe cylindrical battery disclosed in the present disclosure are as follows.

A safe cylindrical battery includes a battery housing, wherein a core assembly is arranged in the battery housing. The core assembly includes an electrode sheet, a compact full electrode lug, and a channel full electrode lug, wherein the compact full electrode lug is vertically arranged on one end of the electrode sheet. The channel full electrode lug is parallelly arranged on the other end of the electrode sheet; the electrode sheet, the compact full electrode lug, and the channel full electrode lug are of an integral structure; and the electrode sheet, the compact full electrode lug, and channel full electrode lug are wound to form a helical structure, wherein an explosion-proof line is arranged on one end of the battery housing corresponding to the channel full electrode lug.

As a preferred solution, the battery housing includes a steel shell, wherein a blind hole is arranged on one end of the steel shell; a positive rivet is sealed in the blind hole; an opening is arranged on the other end of the steel shell; and a negative cover plate is sealed at the opening.

As a preferred solution, the channel full electrode lug is arranged corresponding to the positive rivet, and the explosion-proof line is engraved on one end of the steel shell corresponding to the positive rivet.

As a preferred solution, the explosion-proof line is in the shape of a circle or a polygon, and the explosion-proof line is arranged around a periphery of the positive rivet.

As a preferred solution, the channel full electrode lug is arranged corresponding to the negative cover plate, and the explosion-proof line is arranged on a surface of the negative cover plate.

As a preferred solution, the explosion-proof line is in the shape of a circle or a cross.

The safe cylindrical battery disclosed by the present disclosure includes the following beneficial effects. The compact full electrode lug and the channel full electrode lug are arranged on two ends of the electrode sheet respectively, wherein the three of them are wound to form the core assembly of the helical structure, and at the same time, the explosion-proof line is engraved on one end of the battery housing corresponding to the channel full electrode lug to form an explosion-proof valve. Therefore, when the battery undergoes the thermal runaway, the gas generated by the side reactions inside the battery is discharged by the channel full electrode lug. When reaching the explosion-proof valve, the gas breaks through the explosion-proof valve to be discharged out directionally due to the small pressure capacity at the explosion-proof valve, thus improving the safety performance.

### BRIEF DESCRIPTION OF DRAWINGS

FIG. 1 is a schematic structure diagram of a safe cylindrical battery of the present disclosure.
FIG. 2 is a schematic structure diagram of a core assembly of a safe cylindrical battery at one view of the present disclosure.
FIG. 3 is a schematic structure diagram of a core assembly of a safe cylindrical battery at the other view of the present disclosure.
FIG. 4 is a schematic structure diagram of a safe cylindrical battery in one embodiment of the present disclosure.
FIG. 5 is a schematic structure diagram of a safe cylindrical battery in the other embodiment of the present disclosure.

10, steel shell; 11, positive rivet; 12, negative cover plate; 20, electrode sheet; 21, compact full electrode lug; 22, channel full electrode lug; and 30, explosion-proof line.

### DETAILED DESCRIPTION OF EMBODIMENTS

The present disclosure is further illustrated and described below in connection with specific embodiments and the specification drawings.

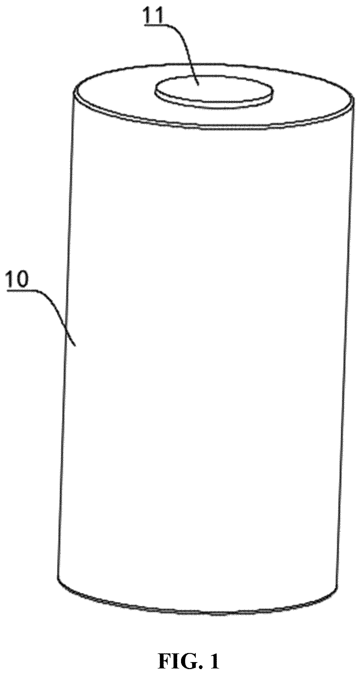

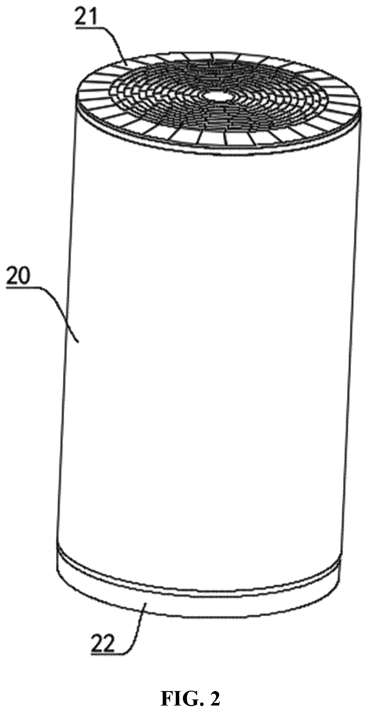

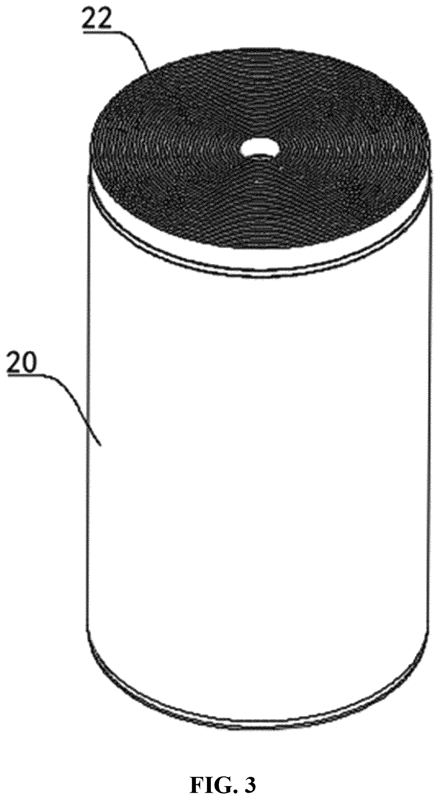

Referring to FIG. 1 to FIG. 3, a safe cylindrical battery includes a battery housing, wherein a core assembly is arranged in the battery housing. The core assembly includes an electrode sheet 20, a compact full electrode lug 21, and a channel full electrode lug 22, wherein the compact full electrode lug 21 is vertically arranged on one end of the electrode sheet 20; the channel full electrode lug 22 is parallelly arranged on the other end of the electrode sheet 20; the electrode sheet 20, the compact full electrode lug 21, and the channel full electrode lug 22 are of an integral structure; the electrode sheet 20, the compact full electrode lug 21, and channel full electrode lug 22 are wound to form a helical structure; and an explosion-proof line 30 is engraved on one end of the battery housing corresponding to the channel full electrode lug 22.

In the above solution, the compact full electrode lug 21 and the channel full electrode lug 22 are arranged on two ends of the electrode sheet 20 respectively, wherein the three of them are wound to form the core assembly of the helical structure. At the same time, the explosion-proof line 30 is engraved on one end of the battery housing corresponding to the channel full electrode lug 22 to form an explosion-proof valve. When the battery undergoes the thermal runaway, the gas generated by the side reactions inside the battery is discharged by the channel full electrode lug 22. When reaching the explosion-proof valve, the gas breaks through the explosion-proof valve to be discharged out directionally due to the small pressure capacity at the explosion-proof valve, thus improving the safety performance.

It should be noted that the channel full electrode lug 22 is parallelly arranged on one end of the electrode sheet 20 and is wound with the electrode sheet 20, and the compact full electrode lug 21 is vertically arranged on the other end of the electrode sheet 20. wherein an appropriate part of the vertical lug is removed by laser, and then the lug is regularly and vertically distributed on the other end of the electrode sheet 20 by the lug stacking technology.

Referring to FIG. 1, the battery housing includes a steel shell 10, wherein a blind hole is arranged on one end of the steel shell 10; a positive rivet 11 is sealed in the blind hole; an opening is arranged on the other end of the steel shell 10; and a negative cover plate 12 is sealed at the opening.

In the above solution, the positive rivet 11 is mounted at the blind hole of the steel shell 10 as the positive electrode of the battery, and the negative cover plate 12 is mounted at the opening of the steel shell 10 as the negative electrode of the battery.

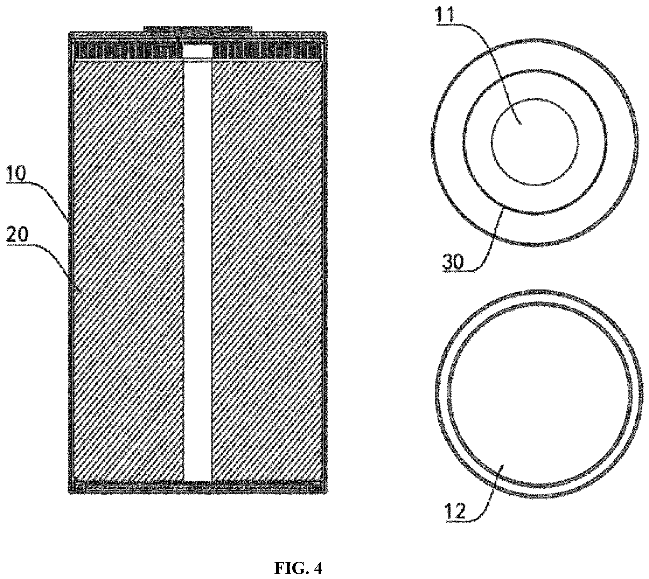

In one embodiment, referring to FIG. 4, the channel full electrode lug 22 is arranged corresponding to the positive rivet 11, and the explosion-proof line 30 is engraved on one end of the steel shell 10 corresponding to the positive rivet 11. When the battery undergoes the thermal runaway, the gas generated by the side reactions inside the battery can be directionally discharged upward through the channel full electrode lug 22 at the top, and the gas breaks through the explosion-proof valve to be discharged directionally from the top of battery due to the small pressure capacity at the explosion-proof valve of the steel shell 10. Specifically, the explosion-proof line 30 is in the shape of a circle or a polygon, and the explosion-proof line 30 is arranged around a periphery of the positive rivet 11.

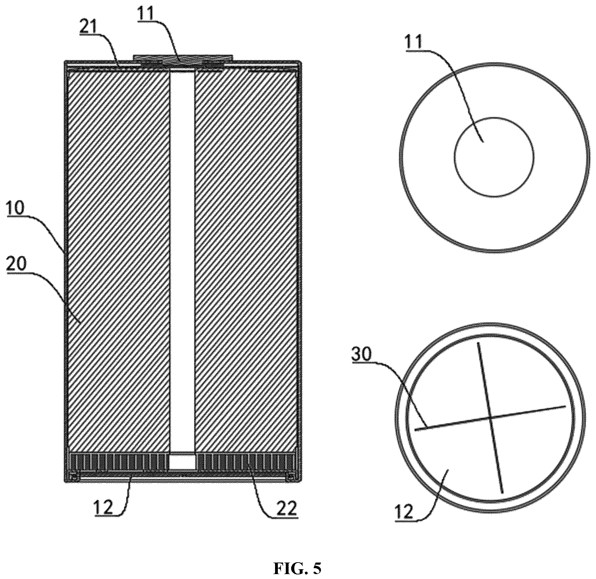

In the other embodiment, referring to FIG. 5, the channel full electrode lug 22 is arranged corresponding to the negative cover plate 12, and the explosion-proof line 30 is engraved on the surface of the negative cover plate 12. When the battery undergoes the thermal runaway, the gas generated by the side reactions inside the battery can be directionally discharged downward through the channel full electrode lug 22 at the bottom, and the gas breaks through the explosion-proof valve to be discharged directionally from the bottom of battery due to the small pressure capacity at the explosion-proof valve of the steel shell 10. Specifically, the explosion-proof line 30 is in the shape of circle or a cross.

The present disclosure provides a safe cylindrical battery. The compact full electrode lug and the channel full electrode lug are arranged on two ends of the electrode sheet respectively, wherein the three of them are wound to form the core assembly of the helical structure, and at the same time, the explosion-proof line is engraved on one end of the battery housing corresponding to the channel full electrode lug to form the explosion-proof valve. When the battery undergoes the thermal runaway, the gas generated by the side reactions in the battery is discharged by the channel full electrode lug; and when reaching the explosion-proof valve, the gas breaks through the explosion-proof valve to be discharged out directionally due to the small pressure capacity at the explosion-proof valve, thus improving the safety performance.

Finally, it should be noted that the above embodiments are only used to illustrate the technical solutions of the present disclosure, and not to restrict the scope of the present disclosure. Although the present disclosure has been described in detail with reference to the preferred embodiments, the person of ordinary skill in the field should understand that modifications or equivalent substitutions can be made to the technical solution of the present disclosure without departing from the essence and scope of the technical solutions of the present disclosure.

## Claims

1. A safe cylindrical battery, comprising a battery housing, wherein a core assembly is arranged in the battery housing, and the core assembly comprises an electrode sheet (20), a compact full electrode lug (21), and a channel full electrode lug (22), wherein the compact full electrode lug (21) is vertically arranged on one end of the electrode sheet (20); the channel full electrode lug (22) is parallelly arranged on another end of the electrode sheet (20); the electrode sheet (20), the compact full electrode lug (21), and the channel full electrode lug (22) are of an integral structure; and the electrode sheet (20), the compact full electrode lug (21), and channel full electrode lug (22) are wound to form a helical structure, wherein an explosion-proof line (30) is arranged on one end of the battery housing corresponding to the channel full electrode lug (22).

2. The safe cylindrical battery according to claim 1, wherein the battery housing comprises a steel shell (10); a blind hole is arranged on one end of the steel shell (10); a positive rivet (11) is sealed in the blind hole; an opening is arranged on another end of the steel shell (10); and a negative cover plate (12) is sealed at the opening.

3. The safe cylindrical battery according to claim 2, wherein the channel full electrode lug (22) is arranged corresponding to the positive rivet (11), and the explosion-proof line (30) is engraved on one end of the steel shell (10) corresponding to the positive rivet (11).

4. The safe cylindrical battery according to claim 3, wherein the explosion-proof line (30) is in a shape of a circle or a polygon, and the explosion-proof line (30) is arranged around a periphery of the positive rivet (11).

5. The safe cylindrical battery according to claim 2, wherein the channel full electrode lug (22) is arranged corresponding to the negative cover plate (12), and the explosion-proof line (30) is engraved on a surface of the negative cover plate (12).

6. The safe cylindrical battery according to claim 5, wherein the explosion-proof line (30) is in a shape of a circle or a cross.
